# EUROPÄISCHE PATENTSCHRIFT

(11) **EP 3 491 716 B1**
(45) Veröffentlichungstag und Bekanntmachung des Hinweises auf die Patenterteilung: **27.01.2021**
(21) Anmeldenummer: 17731147.9
(22) Anmeldetag: 20.06.2017
(51) Int. Cl.: H02K 3/50, H02K 11/25

(54) **VERFAHREN ZUR HERSTELLUNG EINES ELEKTROMOTORS UND ELEKTROMOTOR**
METHOD FOR PRODUCING AN ELECTRIC MOTOR AND ELECTRIC MOTOR
PROCÉDÉ DE FABRICATION D'UN MOTEUR ÉLECTRIQUE ET MOTEUR ÉLECTRIQUE

(30) Priorität: 29.07.2016 DE 102016214032
(43) Veröffentlichungstag der Anmeldung: 05.06.2019
(73) Patentinhaber: Volkswagen Aktiengesellschaft, 38440 Wolfsburg (DE)
(72) Erfinder: FUCHS, Martin, 74257 Untereisesheim (DE); KNÖPPEL, Johannes Daniel, 34308 Bad Emstal (DE); WILHELM, Nils, 34549 Edertal (DE); WIST, Alex, 34225 Baunatal (DE); MÜLLER, David, 37181 Hardegsen (DE)
(86) Internationale Anmeldenummer: PCT/EP2017/064987
(87) Internationale Veröffentlichungsnummer: WO 2018/019474

(56) Entgegenhaltungen:
- DE-A1-102012 011 004
- US-A- 3 130 479
- US-A- 5 343 613

## Beschreibung

Die Erfindung betrifft ein Verfahren zur Herstellung eines Elektromotors, insbesondere eines als Antriebsmaschine eines Kraftfahrzeuges einsetzbaren Elektromotors, mit einer einen Wickelkopf aufweisenden und als Wellenwicklung ausgebildet verteilten Wicklung und mit einem Temperatursensor zur Erfassung der Temperatur der Wicklung bzw. des Wickelkopfes. Weiterhin betrifft die Erfindung einen derartigen Elektromotor.

Es ist allgemein bekannt, dass Elektromotoren vor Überhitzung geschützt werden müssen, um insbesondere eine Schädigung der Wicklungen und/oder eine negative Beeinträchtigung der Magnete zu vermeiden. Dies wird in der Regel dadurch bewirkt, dass die Temperatur eines Elektromotors an einer oder mehreren Stellen direkt oder indirekt überwacht wird und ab einer vorgegebenen Temperatur Maßnahmen ergriffen werden, um einem weiteren Temperaturanstieg entgegenzuwirken. In den meisten Fällen erfolgt dies durch eine Steuerung oder Regelung mit Hilfe der Leistungselektronik.

Der Wickelkopf ist in der Regel die heißeste Stelle und daher begehrter Messpunkt für den Temperatursensor. Die DE 10 2012 011 004 A1 beschreibt einen Elektromotor mit einem Stator, bei welchem im Bereich eines der Wickelköpfe einer Wicklung ein Aufnahmeraum für einen Temperatursensor vorgesehen ist, welcher durch eine vorübergehende Anordnung eines Platzhalters in der Wicklung und eine nachfolgende Imprägnierung mit einem Imprägniermaterial erzeugt wird. Der Aufnahmeraum für den Temperatursensor ist also als Hohlkörper im Imprägniermaterial des Wickelkopfes ausgebildet.

Weiterhin ist aus der US 3 130 479 A ist ein Verfahren zur Herstellung eines Stators bekannt, bei dem ein Aufnahmeraum durch kräftiges Reindrücken eines Platzhalters in den Wickelkopf unter plastischer Deformation der Wickeldrähte erzeugt wird.

Aus der DE 10 2012 104 210 A1 und der DE 10 2011 088 527 A1 ist jeweils ein Elektromotor mit einem Temperatursensor zur Erfassung einer Temperatur einer Wicklung bekannt. Hierbei handelt es sich um einen luftgekühlten Elektromotor für Haushaltsgeräte und Elektrowerkzeugmaschinen, welcher einen zweipoligen Stator aufweist.

Zur Leistungssteigerung von E-Maschinen werden die Wicklungen immer dichter aufgebaut, wodurch der Bauraum für die Anordnung eines Temperatursensors zur Erfassung der Temperatur immer enger wird. Bei der Verwendung von Rundspulen ergibt sich im Wickelkopf der Bauraum für den Temperatursensor durch den konstruktiv bedingt vorhandenen Abstand zwischen zwei benachbarten Rundspulen. In jüngster Zeit setzen sich jedoch zunehmend Elektromotoren mit verteilten Wicklungen bzw. Wellenwicklungen durch. Hierbei besteht die Wicklung aus mehreren schichtweise übereinander angeordneten umlaufenden ringförmigen Spulenlagen. Aufgrund dieser Konstruktion ist der Wickelkopf einer Wellenwicklung je nach der Geometrie der Kupferdrähte sehr steif. Hierdurch lässt sich der Temperatursensor nicht ohne weiteres zwischen die Spulenlagen der Wicklung stecken.

Bisher erfolgte die Temperaturmessung an derartigen Wickelköpfen deshalb durch einen radial oder axial am Wickelkopf angeordneten Temperatursensor, sodass dieser nur punktuell an der Wickelkopfoberfläche anliegt. Hierdurch liefert die Temperaturmessung Werte, welche niedriger sind als die tatsächlich vorherrschenden Temperaturen im Inneren des Wickelkopfes. Zudem ist ein großer zeitlicher Verzug gemessener Temperaturänderungen zu beobachten. Die möglichst genaue Kenntnis ist jedoch Voraussetzung, um das Maximum an Performance der E-Maschine zur Verfügung zu stellen.

Vor diesem Hintergrund liegt der Erfindung die Aufgabe zugrunde, ein Verfahren zur Herstellung eines Elektromotors derart auszuführen, dass die Temperaturmessung in einer insbesondere als Wellenwicklung ausgebildeten verteilten Wicklung eines Stators wesentlich verbessert wird, insbesondere also unerwünschte Fehlereinflüsse bei der Temperaturmessung vermieden werden.

Die erstgenannte Aufgabe wird gelöst mit einem Verfahren gemäß den Merkmalen des Patentanspruches 1. Die Unteransprüche 2 bis 8 betreffen besonders zweckmäßige Weiterbildungen des erfindungsgemäßen Verfahrens.

Erfindungsgemäß ist also ein Verfahren zur Herstellung eines einen Rotor und einen Stator umfassenden Elektromotors, dessen Stator ein hohlzylindrisches Statorblech und eine aus mehreren schichtweise übereinander angeordneten umlaufenden Spulenlagen bestehende verteilte Wicklung aufweist, vorgesehen, bei welchem ein Platzhalter für einen Temperatursensor zur Erfassung einer Temperatur der Wicklung in axialer Richtung zwischen einer ersten Spulenlage und einer benachbarten zweiten Spulenlage eines Wickelkopfes der Wicklung derart eingebracht wird, dass der Platzhalter in einer sich zwischen der ersten Spulenlage und der zweiten Spulenlage erstreckenden spaltförmigen Ausnehmung angeordnet ist, wobei anschließend die erste Spulenlage an eine Umfangsfläche des Platzhalters und an die zweite Spulenlage bzw. in Richtung der zweiten Spulenlage angedrückt und dabei derart plastisch verformt wird, dass ein zwischen den Mantelflächen der beiden Spulenlagen und der Umfangsfläche des Platzhalters zuvor vorhandener Freiraum reduziert und eine Anlagefläche zwischen der Mantelfläche der ersten Spulenlage und der Umfangsfläche des Platzhalters vergrößert wird, wobei sich durch ein nachfolgendes Entfernen des Platzhalters ein Aufnahmeraum in dem Wickelkopf ausbildet, in welchem im Anschluss ein Temperatursensor eingesteckt wird. Durch das erfindungsgemäße Verfahren wird gewährleistet, dass die Spulenlagen den in dem Aufnahmeraum angeordneten Temperatursensor umlaufend umschließen, sodass es zu einem nahezu vollflächigen Kontakt zwischen einer äußeren Mantelfläche des Temperatursensors und den beiden Spulenlagen kommt. Durch den flächigen Kontakt zwischen dem Temperatursensor und den Spulenlagen wird eine im Vergleich zu einer Temperaturmessung mit einer punktuellen Anlage des Temperatursensors wesentlich verbesserte Temperaturmessung in einem Wickelkopf einer Wellenwicklung zur Verfügung gestellt. Insbesondere können unerwünschte Fehlereinflüsse und Messwertabweichungen vermieden werden. Dadurch, dass sich der Aufnahmeraum und damit auch der in diesen eingesteckte Temperatursensor in axialer Richtung zwischen den beiden Spulenlagen bis in das Innere des Wickelkopfes erstrecken, wird nicht wie beim eingangs genannten Stand der Technik an der Oberfläche des Wickelkopfes gemessen, sondern an der heißesten Stelle eines Inneren des Wickelkopfes, sodass der Elektromotor mit einem Maximum an Performance betrieben werden kann.

Das Einbringen des Platzhalters zwischen den beiden Spulenlagen und die plastische Verformung der Spulenlage wird insbesondere dadurch erleichtert bzw. ermöglicht, dass der Platzhalter zwischen einer radial außenliegenden oder einer radial innenliegenden ersten Spulenlage und einer benachbarten zweiten Spulenlage eingebracht wird. Dabei hat es sich als besonders zweckmäßig erwiesen, dass die erste Spulenlage die radial innenliegende Spulenlage ist, welche als letztes in den Nuten des Statorbleches angeordnet wird, und die zweite Spulenlage eine benachbarte, die erste Spulenlage umschließende Spulenlage ist. Denkbar wäre allerdings auch, dass die erste Spulenlage die radial außen liegende Spulenlage ist, welche als erstes in den Nuten des Statorbleches angeordnet wird, und die zweite Spulenlage eine benachbarte von der ersten Spulenlage umschlossenen Spulenlage ist.

Weiterhin ist vorgesehen, dass das Andrücken der ersten Spulenlage an den Platzhalter und die zweite Spulenlage durch einen Formstempel erfolgt, welcher in radialer Richtung auf die erste Spulenlage einwirkt. Hierdurch kann die für die plastische Verformung der ersten Spulenlage erforderliche Kraft prozesssicher und reproduzierbar zur Verfügung gestellt werden. In diesem Fall erweist es sich als zweckmäßig, dass ein Formstempel mit einer sich in axialer Richtung erstreckenden konkaven Aussparung verwendet wird, wobei ein an dem Platzhalter anliegender Abschnitt der ersten Spulenlage durch die konkave Aussparung des Formstempels geformt wird. Hierdurch wird gewährleistet, dass die erste Spulenlage im Bereich um den Platzhalter herum derart plastisch verformt wird, dass die Spulenlage und der Temperatursensor nahezu flächig aneinander anliegen und gleichzeitig der Freiraum zwischen den beiden Spulenlagen in einem dem Platzhalter benachbarten Bereich auf ein Minimum reduziert wird.

Erfindungsgemäß ist weiter vorgesehen, dass die spaltförmige Ausnehmung zwischen den beiden Spulenlagen durch ein axiales Einführen eines dornartigen Werkzeuges erzeugt wird. Aufgrund der Steifigkeit der aus Kupferdraht bestehenden Spulenlagen führt das Einführen des Werkzeugdorns zu einer Biegung der Spulenlagen. Durch den beschränkten Biegeradius der Kupfermatten bildet sich dabei keine ideale, auf den Querschnitt des Temperatursensors abgestimmte Öffnung, sondern ein länglicher Spalt zwischen den beiden Spulenlagen aus. Durch den Werkzeugdorn können die zum Aufbiegen der Spulenlagen erforderlichen Kräfte prozesssicher und reproduzierbar in die Spulenlagen eingebracht werden.

Abweichend hiervon ist es je nach Drahtgeometrie der beiden Spulenlagen auch möglich, dass die spaltförmige Ausnehmung zwischen den beiden Spulenlagen durch ein axiales Einführen des Platzhalters zwischen die beiden Spulenlagen erzeugt wird. Hierbei ist es besonders vorteilhaft, dass der Platzhalter nach dem Aufbiegen der Spulenlagen in der erzeugten spaltförmigen Ausnehmung verbleibt und anschließend den Gegenhalter bzw. die Anlage während der plastischen Verformung bzw. Formgebung der ersten Spulenlage bildet.

Eine vorteilhafte Variante des vorliegenden Verfahrens wird auch dadurch geschaffen, dass der Wickelkopf vor dem Entfernen des Platzhalters in einem Imprägnierbad mit einem Imprägniermaterial, insbesondere einem Imprägnierharz, imprägniert wird. Hierdurch sorgt der während der Formgebung der Spulenlagen in der spaltförmigen Ausnehmung angeordnete Platzhalter auch dafür, dass sich nach dem Imprägnieren des Wickelkopfes und einem anschließenden Entnehmen bzw. Entfernen des Platzhalters der Aufnahmeraum für den Temperatursensor ausbildet. Der Aufnahmeraum ist dabei frei von Imprägniermaterial und wird von den Spulenlagen und dem ausgehärteten Imprägniermaterial begrenzt.

Eine hiervon abweichende andere Variante des erfindungsgemäßen Verfahrens sieht dagegen vor, dass der Platzhalter vor dem Imprägnieren entfernt und der Aufnahmeraum für den Temperatursensor durch einen anderen, zweiten Platzhalter verschlossen wird, welcher nach dem Imprägnieren aus dem Aufnahmeraum entfernt wird. Hierdurch können die Eigenschaften der beiden Platzhalter an ihre jeweiligen Aufgaben angepasst werden. Der erste Platzhalter benötigt aufgrund der auf ihn einwirkenden Kräfte zur Verformung der ersten Spulenlage eine gewisse Steifigkeit bzw. Härte und besteht daher aus einem geeigneten Hartkunststoff oder Metall. Bei dem zweiten Platzhalter liegt der Fokus eher auf der leichten Entformbarkeit, sodass dieser aus Polytetrafluorethylen (PTFE) besteht oder zumindest eine Beschichtung aus PTFE aufweist.

Eine vorteilhafte Weiterbildung des Verfahrens wird auch dadurch geschaffen, dass der Stator nach dem Imprägnieren und dem Entfernen des jeweiligen Platzhalters aus dem Aufnahmeraum in ein Gehäusebauteil eingefügt wird und anschließend der Temperatursensor durch eine Öffnung im Gehäusebauteil hindurch in den Aufnahmeraum im Wickelkopf eingesteckt wird. Hierdurch kann der Temperatursensor nach der Fertigstellung des Elektromotors von außen in den Aufnahmeraum im Wickelkopf des Stators eingesteckt werden. Diese Ausgestaltung ermöglicht sowohl eine besonders einfache Montage als auch Demontage des Temperatursensors, sodass der Temperatursensor auch zu Reparatur- oder Kontrollzwecken bzw. im Austausch gegen einen funktionsfähigen Temperatursensor entnommen werden kann.

Weiterhin ist vorgesehen, dass vor dem Fügen des Stators in das Gehäuseteil eine Isolierscheibe mit einem Einführtrichter derart an dem Statorblech angeordnet wird, dass der Einführtrichter nach dem Fügen koaxial zu der Durchbrechung in dem Gehäusebauteil und koaxial zum Aufnahmeraum im Wickelkopf des Stators angeordnet ist und der Temperatursensor beim Einstecken in die Durchbrechung im Gehäusebauteil durch den Einführtrichter in den Aufnahmeraum im Wickelkopf geführt wird. Hierdurch wird das Einstecken des Temperatursensors in den Aufnahmeraum im Wickelkopf wesentlich vereinfacht, dabei die Montagezeit verkürzt und eine prozesssichere Anordnung des Temperatursensors in dem Aufnahmeraum im Wickelkopf ermöglicht.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen erfindungsgemäßen Elektromotor in einer geschnittenen Darstellung;
- Fig. 2: die Einzelheit X aus Figur 1 in einer vergrößerten Ansicht;
- Fig. 3: eine schematische Darstellung des Wickelkopfes während eines ersten Verfahrensschrittes des erfindungsgemäßen Verfahrens;
- Fig. 4: eine schematische Darstellung des Wickelkopfes während des zweiten Verfahrensschrittes;
- Fig. 5: eine schematische Darstellung einer spaltförmigen Ausnehmung im Wickelkopf nach Abschluss des zweiten Verfahrensschrittes;
- Fig. 6: eine schematische Darstellung des Wickelkopfes während des dritten Verfahrensschrittes;
- Fig. 7: eine schematische Darstellung des Wickelkopfes während des vierten Verfahrensschrittes;
- Fig. 8: eine schematische Darstellung eines Aufnahmeraumes für den Temperatursensor im Wickelkopf nach Abschluss des vierten Verfahrensschrittes;
- Fig. 9: eine schematische Darstellung des Stators und des Gehäusebauteiles während des Fügevorganges;
- Fig. 10: eine schematische Darstellung des Elektromotors während des Einsteckvorganges des Temperatursensors in den Aufnahmeraum im Wickelkopf;
- Fig. 11: eine schematische Darstellung des Wickelkopfes während eines ersten Verfahrensschrittes einer alternativen Verfahrensvariante;
- Fig. 12: eine schematische Darstellung des Wickelkopfes während eines zweiten Verfahrensschrittes der alternativen Verfahrensvariante;
- Fig. 13: eine schematische Darstellung des Wickelkopfes während eines dritten Verfahrensschrittes der alternativen Verfahrensvariante;
- Fig. 14: eine schematische Darstellung des Wickelkopfes während eines vierten Verfahrensschrittes der alternativen Verfahrensvariante.

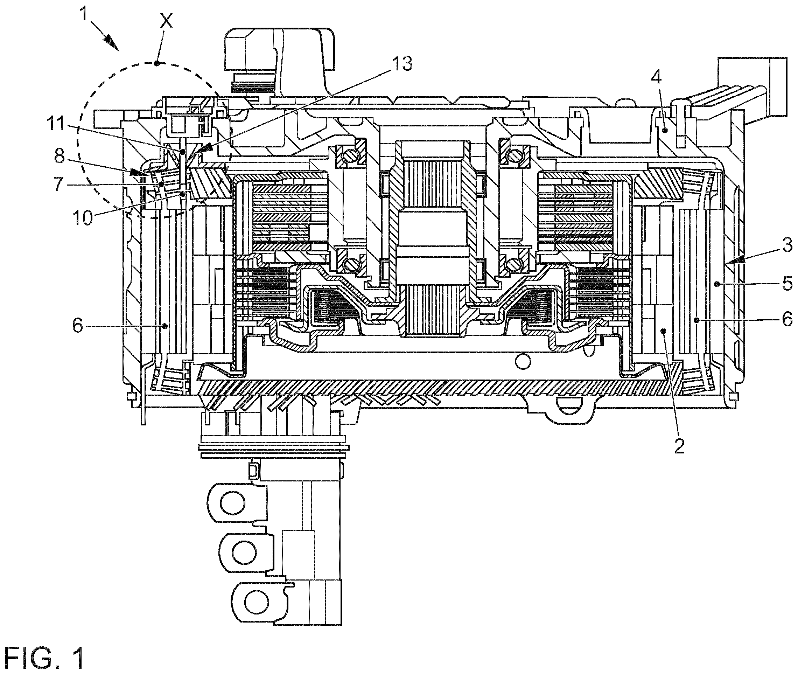

Figur 1 zeigt einen als Antriebsmotor für ein Kraftfahrzeug ausgebildeten erfindungsgemäßen Elektromotor 1 in einer geschnittenen Darstellung. Der Elektromotor 1 weist einen Rotor 2, einen Stator 3 sowie ein den Stator 3 umschließendes und als Kühleinheit ausgebildetes Gehäusebauteil 4 auf.

Der Stator 3 umfasst ein aus einem Blechpaket bestehendes hohlzylindrisches Statorblech 5, eine aus mehreren Drähten bestehende als Wellenwicklung ausgebildete, verteilte Wicklung 6 mit einem axial aus dem Statorblech 5 herausragenden Wickelkopf 7 sowie eine Isolierscheibe 8. Die verteilte Wicklung 6 ist in sich radial nach innen erstreckenden Nuten des Statorbleches 5 angeordnet.

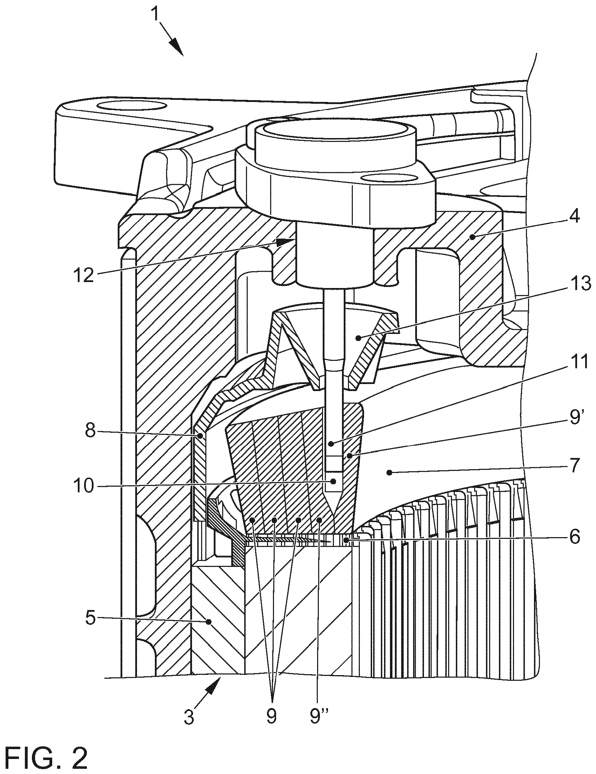

Wie in Figur 2, welche die Einzelheit X aus Figur 1 vergrößert darstellt, zur erkennen ist, besteht die als Wellenwicklung ausgebildete, verteilte Wicklung 6 bzw. der Wickelkopf 7 aus mehreren schichtweise übereinander angeordneten, umlaufenden ringförmigen Spulenlagen 9, 9', 9". Bei dem dargestellten Ausführungsbeispiel bilden insgesamt fünf Spulenlagen 9, 9', 9" die verteilte Wicklung 6. Die Spulenlagen 9, 9', 9" bestehen wiederum aus gewickelten Drähten, insbesondere aus Kupfer, und bilden jeweils eine Kupfermatte.

Zwischen der radial innenliegenden ersten Spulenlage 9' und der diese umschließenden benachbarten zweiten Spulenlage 9" ist ein sich axial erstreckender Aufnahmeraum 10 für einen Temperatursensor 11 zur Erfassung einer Temperatur der Wicklung 6 vorgesehen. Der Temperatursensor 11 durchgreift dabei eine Öffnung 12 in dem Gehäusebauteil 4 sowie einen an der Isolierscheibe 8 angeordneten Einführtrichter 13 und ist in den zwischen den beiden Spulenlagen 9', 9" eingebetteten Aufnahmeraum 10 im Wickelkopf 7 eingesteckt.

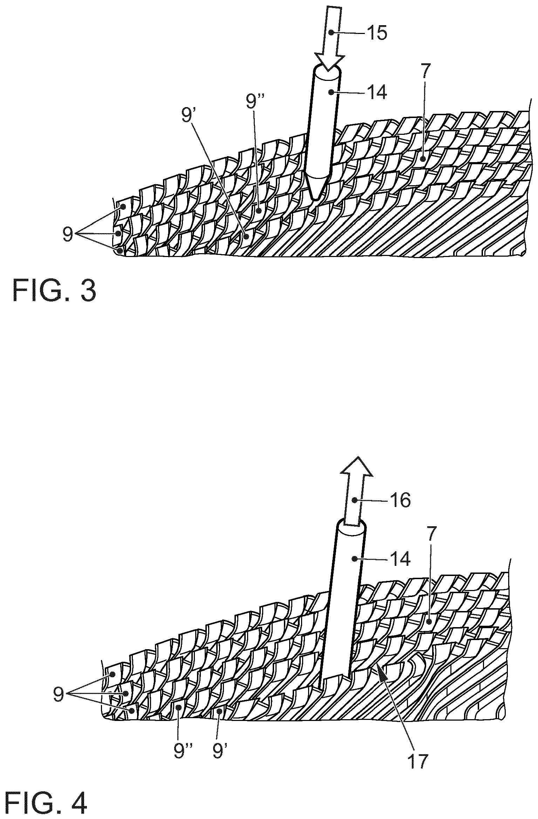

Nachfolgend wird anhand der Figuren 3 bis 10 das erfindungsgemäße Verfahren zur Herstellung des in den Figuren 1 und 2 abgebildeten Elektromotors 1 kurz beschrieben.

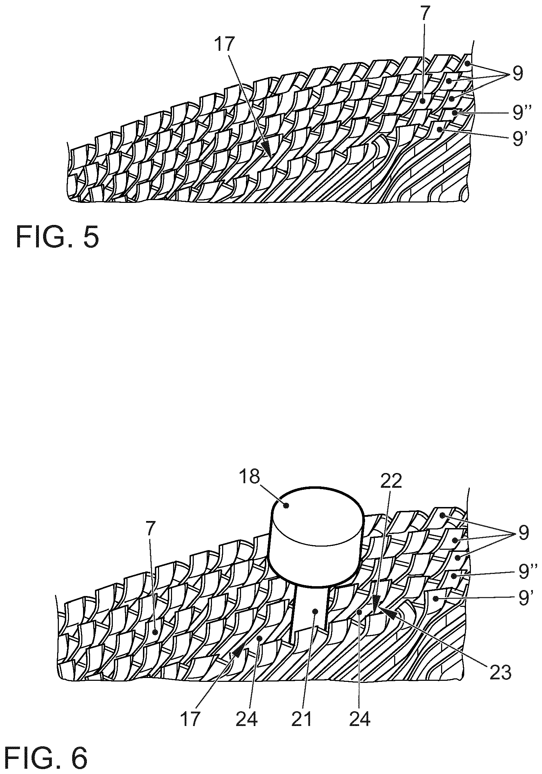

Zunächst wird ein Werkzeugdorn 14, wie in Figur 3 dargestellt, in axialer Richtung zwischen die radial innenliegende erste Spulenlage 9' und die benachbarte zweite Spulenlage 9" des Wickelkopfes 7 eingebracht bis er sich in der in Figur 4 dargestellten Lage zwischen den beiden Spulenlagen 9', 9" befindet. Das Einbringen des Werkzeugdorns 14 ist in Figur 3 durch einen Richtungspfeil 15 dargestellt. Anschließend wird der Werkzeugdorn 14 wieder aus dem Wickelkopf 7 entfernt (siehe Richtungspfeil 16 in Figur 4). Aufgrund der Steifigkeit der aus Kupferdraht bestehenden Spulenlagen und dem daraus resultierenden beschränkten Biegeradius führt das Einbringen des Werkzeugdorns 14 zumindest abschnittsweise zu einer Biegung der Spulenlagen 9', 9", sodass sich eine in Figur 4 und 5 dargestellte spaltförmige Ausnehmung 17 zwischen diesen ausgebildet.

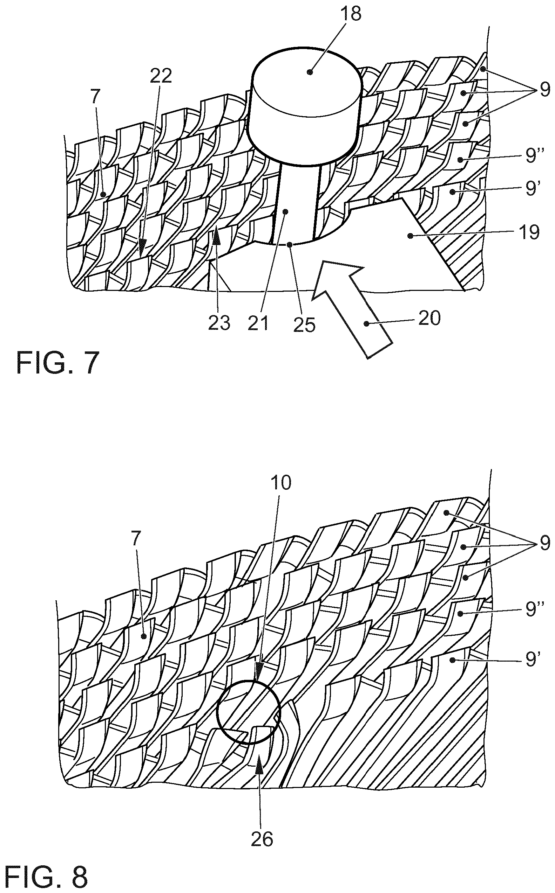

Anschließend wird zunächst, wie in Figur 6 dargestellt, ein Platzhalter 18 für den Temperatursensor 11 in der spaltförmigen Ausnehmung 17 zwischen den beiden Spulenlagen 9', 9" angeordnet. Dabei entspricht eine Querschnittsfläche des Platzhalters 18 in etwa der Querschnittsfläche des Temperatursensors. Dann wird die erste Spulenlage 9' mittels eines in radialer Richtung auf diese einwirkenden Formstempels 19 an eine äußere Umfangsfläche 21 des Platzhalters 18 und an die zweite Spulenlage 9" angedrückt bzw. in Richtung der zweiten Spulenlage 9" gedrückt (siehe Richtungspfeil 20). Hierbei wird die ersten Spulenlage 9' derart plastisch verformt, dass ein zwischen den Mantelflächen 22, 23 der beiden Spulenlagen 9', 9" und der Umfangsfläche 21 des Platzhalters 18 vorhandener Freiraum 24 (siehe Figur 6) reduziert und gleichzeitig eine Anlagefläche zwischen der Mantelfläche 22 der ersten Spulenlage 9' und der Umfangsfläche 20 des Platzhalters 18 vergrößert wird. Durch ein nachfolgendes Entfernen des Platzhalters 18 bildet sich dann der Aufnahmeraum 10 für den Temperatursensor 11 aus (siehe Figur 8).

Der in radialer Richtung auf die erste Spulenlage 9' einwirkende Formstempel 19, weist eine sich in axialer Richtung erstreckende konkave Aussparung 25 auf. Durch diese konkave Aussparung 25 wird ein den Platzhalter 18 zumindest abschnittsweise umschließender bzw. an diesem anliegender Abschnitt 26 der ersten Spulenlage 9' geformt (siehe Figur 8). Dieser Abschnitt 26 der ersten Spulenlage 9' weist nach der plastischen Verformung also die Negativform der konkaven Aussparung 25 des Formstempels 19 auf.

Für eine nachfolgende Imprägnierung des Wickelkopfes in einem Imprägnierbad wird in den Aufnahmeraum 10 ein anderer, nicht dargestellter, zweiter Platzhalter eingesteckt, sodass ein Fluten des Aufnahmeraumes 10 mit Imprägniermaterial verhindert wird. Nach dem Imprägnieren wird der zweite Platzhalter dann aus dem Aufnahmeraum 10 herausgenommen. Denkbar wäre auch, dass der Platzhalter 18, der während der plastischen Verformung der ersten Spulenlage 9' zwischen den beiden Spulenlagen 9, 9" angeordnet war, erst im Anschluss an die Imprägnierung aus dem Aufnahmeraum 10 entfernt wird. Je nach Lage des Platzhalters 18 oder des zweiten, nicht dargestellten Platzhalters im Imprägnierbad, kann es erforderlich sein, diesen gegen ein Herausfallen zu sichern. Dies kann durch einen Hinterschnitt oder durch Form- oder Kraftschluss an einem der dem Wickelkopf 7 benachbarten Bauteile des Stators 3 erfolgen.

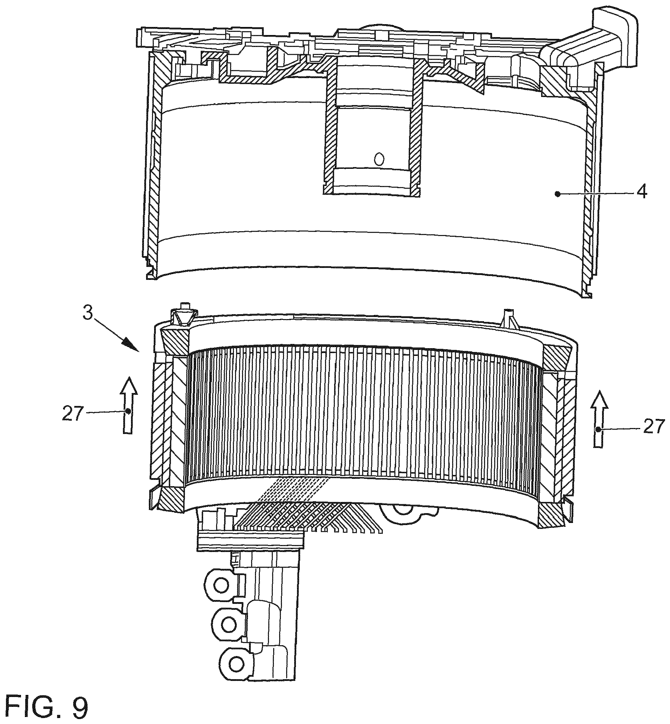

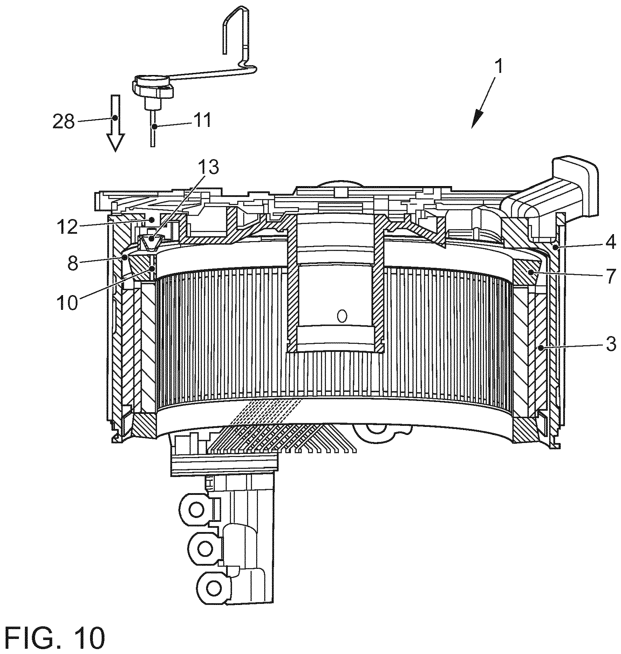

Anschließend wird der Stator 3 zusammen mit dem Rotor 2, wie in Figur 9 dargestellt, in das als Kühleinheit ausgebildet Gehäusebauteil 4 eingefügt. Nach dem Fügeprozess, welcher in Figur 9 durch zwei Richtungspfeile 27 angedeutet ist, wird dann der Temperatursensor 11 durch die Öffnung 12 im Gehäusebauteil 4 hindurch in den Aufnahmeraum 10 im Wickelkopf 7 eingesteckt. Durch den an der Isolierscheibe 8 angeordneten Einführtrichter 13, welcher koaxial bzw. deckungsgleich zu der Öffnung 12 und koaxial zu dem Aufnahmeraum 10 angeordnet ist, wird der Temperatursensor in den Aufnahmeraum 10 geführt. Das Einstecken des Temperatursensors 11 in den Elektromotor 1 ist in Figur 10 durch einen Richtungspfeil 28 angedeutet.

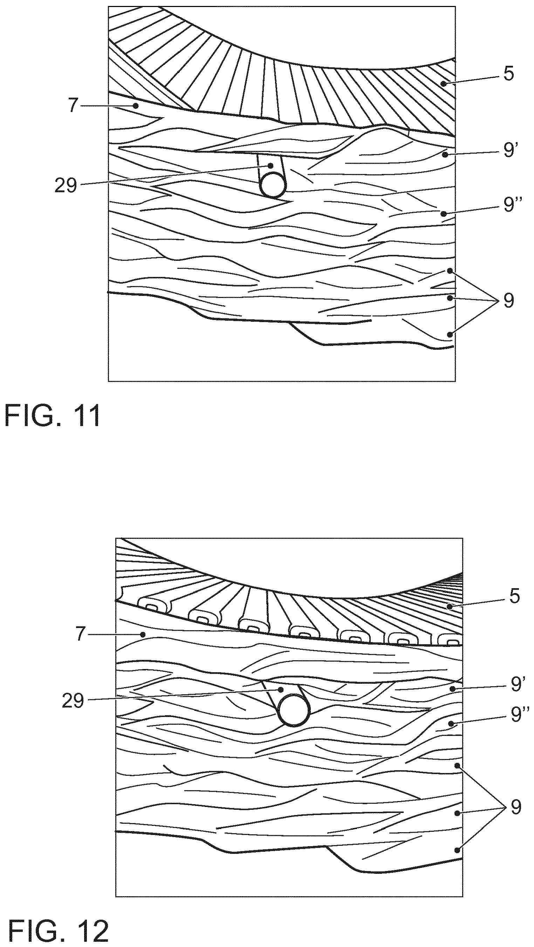

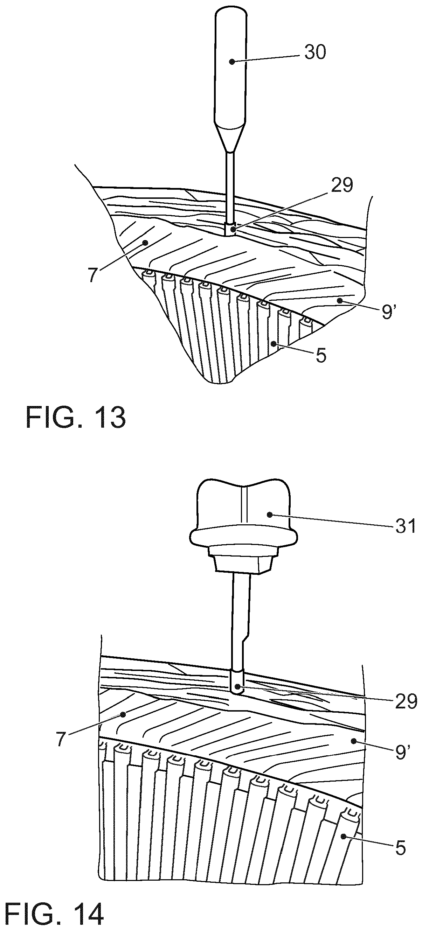

Figuren 11 bis 14 zeigen eine abgewandelte Verfahrensvariante, nach welcher zwischen der radial innenliegenden ersten Spulenlage 9' und der benachbarten zweiten Spulenlage 9" bereits vor dem Einlegen der einzelnen Spulenlagen 9 ein Röhrchen 29, insbesondere aus Capton oder aus einem Schrumpfschlauch, an eine der Spulenlagen 9', 9" geklebt wird. Alternativ kann das Röhrchen 29 auch beim Einlegeprozess zwischen beiden Spulenlagen 9', 9" eingelegt werden. Während des Einlegeprozesses wird das Röhrchen 29 verdrückt. Nach vollständigem Einlegen der Spulenlagen 9, 9', 9" wird in das Röhrchen 29 ein steifer Platzhalter 30 eingedrückt, wobei das Röhrchen 29 hierbei als Einführhilfe dient. Für den Imprägnierprozess wird dann der steife Platzhalter 30 durch einen Platzhalter 31 aus PTFE ersetzt. Es ist auch denkbar, dass auf den steifen Platzhalters 30 verzichtet wird und gleich der Platzhalter 31 aus PTFE in das Röhrchen 29 eingedrückt wird, welcher dann für den Imprägnierprozess in dem Röhrchen 29 verbleibt und erst nachfolgend entnommen wird.

**Bezugszeichenliste**

| | | | |
|---|---|---|---|
| 1 | Elektromotor | 16 | Richtungspfeil |
| 2 | Rotor | 17 | spaltförmige Ausnehmung |
| 3 | Stator | 18 | Platzhalter |
| 4 | Gehäusebauteil | 19 | Formstempel |
| 5 | Statorblech | 20 | Richtungspfeil |
| | | | |
| 6 | Wicklung | 21 | Umfangsfläche |
| 7 | Wickelkopf | 22 | Mantelfläche |
| 8 | Isolierscheibe | 23 | Mantelfläche |
| 9 | Spulenlage | 24 | Freiraum |
| 9' | erste Spulenlage | 25 | konkave Aussparung |
| 9" | zweite Spulenlage | | |
| 10 | Aufnahmeraum | | |
| | | | |
| 11 | Temperatursensor | 26 | Abschnitt |
| 12 | Öffnung | 27 | Richtungspfeil |
| 13 | Einführtrichter | 28 | Richtungspfeil |
| 14 | Werkzeugdorn | 29 | Röhrchen |
| 15 | Richtungspfeil | 30 | Platzhalter |
| | | 31 | Platzhalter |

## Patentansprüche

1. Verfahren zur Herstellung eines einen Rotor (3) und einen Stator (2) umfassenden Elektromotors (1), dessen Stator (2) ein hohlzylindrisches Statorblech (5) und eine aus mehreren schichtweise übereinander angeordneten umlaufenden Spulenlagen (9, 9', 9") bestehende verteilte Wicklung (6) aufweist, bei welchem ein Platzhalter (18) für einen Temperatursensor (11) zur Erfassung einer Temperatur der Wicklung (6) in axialer Richtung zwischen eine ersten Spulenlage (9') und eine benachbarte zweiten Spulenlage (9") eines Wickelkopfes (7) der Wicklung (6) derart eingebracht wird, dass der Platzhalter (18) in einer sich zwischen der ersten Spulenlage (9') und der zweiten Spulenlage (9") erstreckenden spaltförmigen Ausnehmung (17) angeordnet ist, wobei anschließend die erste Spulenlage (9') an eine Umfangsfläche (21) des Platzhalters (18) und an die zweite Spulenlage (9") angedrückt und dabei derart plastisch verformt wird, dass ein zwischen den Mantelflächen (22, 23) der beiden Spulenlagen (9', 9") und der Umfangsfläche (21) des Platzhalters (18) vorhandener Freiraum (24) reduziert und eine Anlagefläche zwischen der Mantelfläche (22) der ersten Spulenlage (9') und der Umfangsfläche (20) des Platzhalters (18) vergrößert wird, wobei sich durch ein nachfolgendes Entfernen des Platzhalters (18) ein Aufnahmeraum (10) in dem Wickelkopf (7) ausbildet, in welchen im Anschluss ein Temperatursensor (11) eingesteckt wird.

2. Verfahren nach Anspruch 1, **dadurch gekennzeichnet, dass** der Platzhalter (18) zwischen einer radial innenliegenden ersten Spulenlage (9') oder einer radial außenliegenden ersten Spulenlage (9) und einer benachbarten zweiten Spulenlage (9, 9") des Wickelkopfes (7) eingebracht wird.

3. Verfahren nach den Ansprüchen 1 oder 2, **dadurch gekennzeichnet, dass** das Andrücken der ersten Spulenlage (9') an den Platzhalter (18) und die zweite Spulenlage (9") durch einen Formstempel (19) erfolgt, welcher in radialer Richtung auf die erste Spulenlage (9') einwirkt.

4. Verfahren nach zumindest einem der vorangehenden Ansprüche, **dadurch gekennzeichnet, dass** ein Formstempel (19) mit einer sich in axialer Richtung erstreckenden konkaven Aussparung (25) verwendet wird, wobei ein an dem Platzhalter (18) anliegender Abschnitt (26) der ersten Spulenlage (9') durch die konkave Aussparung (25) des Formstempels (19) geformt wird.

5. Verfahren nach zumindest einem der vorangehenden Ansprüche, **dadurch gekennzeichnet, dass** die spaltförmige Ausnehmung (17) zwischen den beiden Spulenlagen (9', 9") durch ein axiales Einführen eines Werkzeugdorns (14) oder des Platzhalters (18) zwischen die beiden Spulenlagen (9', 9") erzeugt wird.

6. Verfahren nach zumindest einem der vorangehenden Ansprüche, **dadurch gekennzeichnet, dass** der Wickelkopf (7) vor dem Entfernen des Platzhalters (18) mit einem Imprägniermaterial imprägniert wird oder dass der Platzhalter (18) vor dem Imprägnieren entfernt und der Aufnahmeraum (10) für den Temperatursensor (11) durch einen anderen, zweiten Platzhalter verschlossen wird, welcher nach dem Imprägnieren aus dem Aufnahmeraum (10) entfernt wird.

7. Verfahren nach zumindest einem der vorangehenden Ansprüche, **dadurch gekennzeichnet, dass** der Stator (3) nach dem Imprägnieren und dem Entfernen des jeweiligen Platzhalters (18) aus dem Aufnahmeraum (10) in ein Gehäusebauteil (4) gefügt wird und anschließend der Temperatursensor (11) durch eine Öffnung (12) im Gehäusebauteil (4) hindurch in den Aufnahmeraum (10) im Wickelkopf (7) eingesteckt wird.

8. Verfahren nach zumindest einem der vorangehenden Ansprüche, **dadurch gekennzeichnet, dass** vor dem Fügen des Stators (3) in das Gehäusebauteil (4) eine Isolierscheibe (8) mit einem Einführtrichter (13) derart an dem Statorblech (5) angeordnet wird, dass der Einführtrichter (13) nach dem Fügen koaxial zu der Öffnung (12) in dem Gehäusebauteil (4) und koaxial zum Aufnahmeraum (10) im Wickelkopf (7) des Stators (3) angeordnet ist und der Temperatursensor (11) beim Einstecken in die Öffnung (12) im Gehäusebauteil (4) durch den Einführtrichter (13) in den Aufnahmeraum (10) im Wickelkopf (7) geführt wird.

## Claims

1. Method for producing an electric motor (1) comprising a rotor (3) and a stator (2), the stator (2) of which has a hollow cylindrical stator plate (5) and a distributed winding (6) comprised of a plurality of circumferential coil layers (9, 9', 9") arranged in layers one atop another, in which a placeholder (18) for a temperature sensor (11) for detecting a temperature of the winding (6) is introduced in the axial direction between a first coil layer (9') and an adjacent second coil layer (9") of a winding head (7) of the winding (6) in such a way that the placeholder (18) is arranged in a gap-shaped clearance (17) extending between the first coil layer (9') and the second coil layer (9"), wherein the first coil layer (9') is then pressed against a circumferential surface (21) of the placeholder (18) and against the second coil layer (9") and is thereby plastically deformed in such a way that a clearance (24) present between the outer surfaces (22, 23) of the two coil layers (9', 9") and the circumferential surface (21) of the placeholder (18) is reduced and a contact surface between the outer surface (22) of the first coil layer (9') and the peripheral surface (20) of the placeholder (18) is enlarged, wherein a receiving space (10) is formed in the winding head (7) via a subsequent removal of the placeholder (18), into which receiving space (10) a temperature sensor (11) is then inserted.

2. Method according to claim 1, **characterized in that** the placeholder (18) is inserted between a radially inner first coil layer (9') or a radially outer first coil layer (9) and an adjacent second coil layer (9, 9") of the winding head (7).

3. Method according to claim 1 or 2, **characterized in that** the pressing of the first coil layer (9') against the placeholder (18) and the second coil layer (9") takes place via a forming die (19) which acts on the first coil layer (9') in the radial direction.

4. Method according to at least one of the preceding claims, **characterized in that** a forming die (19) having a concave recess (25) extending in the axial direction is used, wherein a segment (26) of the first coil layer (9') which rests against the placeholder (18) is formed by the concave recess (25) of the forming die (19).

5. Method according to at least one of the preceding claims, **characterized in that** the gap-shaped clearance (17) between the two coil layers (9', 9") is generated via an axial insertion of a tool mandrel (14) or of the placeholder (18) between the two coil layers (9', 9").

6. Method according to at least one of the preceding claims, **characterized in that** the winding head (7) is impregnated with an impregnating material prior to the removal of the placeholder (18), or **in that** the placeholder (18) is removed prior to impregnation and the receiving space (10) for the temperature sensor (11) is closed off by another, second placeholder which is removed from the receiving space (10) after the impregnation.

7. Method according to at least one of the preceding claims, **characterized in that,** after the impregnation and the removal of the respective placeholder (18) from the receiving space (10), the stator (3) is assembled into a housing component (4) and the temperature sensor (11) is then inserted, through an opening (12) in the housing component (4), into the receiving space (10) in the winding head (7).

8. Method according to at least one of the preceding claims, **characterized in that,** before the stator (3) is assembled into the housing component (4), an insulation disk (8) having an insertion funnel (13) is arranged at the stator plate (5) in such a way that, after the assembly, the insertion funnel (13) is arranged coaxially with respect to the opening (12) in the housing component (4) and coaxially with respect to the receiving space (10) in the winding head (7) of the stator (3), and the temperature sensor (11), upon being inserted into the opening (12) in the housing component (4), is guided through the insertion funnel (13) into the receiving space (10) in the winding head (7).

## Revendications

1. Procédé de fabrication d'un moteur électrique (1) comprenant un rotor (3) et un stator (2), dont le stator (2) comporte une tôle de stator (5) en forme de cylindre creux et un enroulement (6) réparti constitué de plusieurs couches de spires (9, 9', 9") périphériques disposées par couches les unes par-dessus des autres, dans lequel un marqueur d'emplacement (18) pour un capteur de température (11) destiné à détecter une température de l'enroulement (6) est introduit dans la direction axiale entre une première couche de spires (9') et une seconde couche de spires (9") adjacente d'une tête d'enroulement (7) de l'enroulement (6), de telle manière que le marqueur d'emplacement (18) est disposé dans un creux (17) en forme de fente s'étendant entre la première couche de spires (9') et la seconde couche de spires (9"), la première couche de spires (9') étant ensuite pressée contre une surface périphérique (21) du marqueur d'emplacement (18) et contre la seconde couche de spires (9") et ainsi déformée plastiquement de telle manière qu'un espace libre (24) présent entre les surfaces d'enveloppe (22, 23) des deux couches de spires (9', 9") et la surface périphérique (21) du marqueur d'emplacement (18) est réduit et une surface d'appui entre la surface d'enveloppe (22) de la première couche de spires (9') et la surface périphérique (20) du marqueur d'emplacement (18) est agrandie, un espace de réception (10), dans lequel un capteur de température (11) est ensuite inséré, se formant dans la tête d'enroulement (7) par un retrait subséquent du marqueur d'emplacement (18).

2. Procédé selon la revendication 1, **caractérisé en ce que** le marqueur d'emplacement (18) est introduit entre une première couche de spires (9') située radialement à l'intérieur ou une première couche de spires (9) située radialement à l'extérieur et une seconde couche de spires (9, 9") adjacente de la tête d'enroulement (7).

3. Procédé selon les revendications 1 ou 2, **caractérisé en ce que** la pression de la première couche de spires (9') contre le marqueur d'emplacement (18) et la seconde couche de spires (9") est effectuée par un poinçon de formage (19), qui agit dans la direction radiale sur la première couche de spires (9').

4. Procédé selon au moins une des revendications précédentes, **caractérisé en ce qu'**un poinçon de formage (19) doté d'un évidement (25) concave s'étendant dans la direction axiale est utilisé, une partie (26) de la première couche de spires (9') en appui contre le marqueur d'emplacement (18) étant formée par l'évidement concave (25) du poinçon de formage (19).

5. Procédé selon au moins une des revendications précédentes, **caractérisé en ce que** le creux (17) en forme de fente entre les deux couches de spires (9', 9") est généré par une insertion axiale d'un mandrin d'outil (14) ou du marqueur d'emplacement (18) entre les deux couches de spires (9', 9").

6. Procédé selon au moins une des revendications précédentes, **caractérisé en ce que** la tête d'enroulement (7) est imprégnée d'une matière d'imprégnation avant le retrait du marqueur d'emplacement (18) ou **en ce que** le marqueur d'emplacement (18) est retiré avant l'imprégnation et l'espace de réception (10) pour le capteur de température (11) est fermé par un autre, second marqueur d'emplacement, qui est retiré de l'espace de réception (10) après l'imprégnation.

7. Procédé selon au moins une des revendications précédentes, **caractérisé en ce que** le stator (3), après l'imprégnation et le retrait du marqueur d'emplacement (18) respectif, est assemblé hors de l'espace de réception (10) dans un élément structural de carter (4) et le capteur de température (11) est ensuite inséré dans l'espace de réception (10) situé dans la tête d'enroulement (7) à travers une ouverture (12) située dans l'élément structural de carter (4).

8. Procédé selon au moins une des revendications précédentes, **caractérisé en ce que**, avant l'assemblage du stator (3) dans l'élément structural de carter (4), un disque isolant (8) doté d'un entonnoir d'insertion (13) est disposé de telle manière sur la tôle de stator (5) que l'entonnoir d'insertion (13) est disposé, après l'assemblage, de manière coaxiale par rapport à l'ouverture (12) située dans l'élément structural de carter (4) et de manière coaxiale par rapport à l'espace de réception (10) situé dans la tête d'enroulement (7) du stator (3) et le capteur de température (11), lors de l'insertion dans l'ouverture (12) située dans l'élément structural de carter (4), est guidé dans l'espace de réception (10) situé dans la tête d'enroulement (7) par l'entonnoir d'insertion (13).
